# EUROPEAN PATENT SPECIFICATION

(11) **EP 4 365 122 B1**
(45) Date of publication and mention of the grant of the patent: **25.11.2026**
(21) Application number: 24164873.2
(22) Date of filing: 20.04.2018
(51) Int. Cl.: B66C 23/18, B66C 23/66, B66C 13/08, B66C 23/52, B66C 13/02

(54) **A MOTION COMPENSATING CRANE FOR USE ON AN OFFSHORE VESSEL**
BEWEGUNGSKOMPENSIERENDER KRAN ZUR VERWENDUNG AUF EINEM OFFSHORE-SCHIFF
GRUE À COMPENSATION DE MOUVEMENT DESTINÉE À ÊTRE UTILISÉE SUR UN NAVIRE EN MER

(30) Priority: 24.04.2017 NL 2018775; 02.05.2017 NL 2018833
(43) Date of publication of application: 08.05.2024
(62) Document number(s) of the earlier application(s) in accordance with Art. 76 EPC: 18792341.2 / 3 615 467
(73) Proprietor: Itrec B.V., 3115 HH Schiedam (NL)
(72) Inventor: VAN VELUW, Cornelis Martinus, 3115 HH SCHIEDAM (NL); ROODENBURG, Joop, 3115 HH SCHIEDAM (NL)
(74) Representative: EP&C

(56) References cited:
- EP-A1- 2 365 211
- WO-A1-2006/076920
- WO-A1-2013/181621
- WO-A1-2015/199543
- DE-A1- 102010 015 412
- US-A1- 2010 230 370

## Description

The present invention relates to the field of offshore vessel cranes.

In the field of offshore wind turbines the need exists for enhanced efficiency and cost reduction, e.g. in view of time and expenses related to maintenance work to be done on the ever growing installed base of offshore wind turbines, e.g. in the North Sea, Baltic, US coastal waters, etc.

Maintenance work may for example include the handling by a tall crane of components "at the height of the nacelle", which includes for example the handling of the nacelle itself, and/or one or more components that are housed in a nacelle and/or mounted on the nacelle, e.g. gearbox, generator, hub, and/or blades, of an offshore wind turbine.

Current designs of offshore wind turbines propose or already have the nacelle at a height of more than 100 meters above sea level, e.g. at 120 meters or more. Therefore the handling of such components requires a very tall crane. Also the mass of such components can be significant, in the range of 5 - 150 tons, with components like the generator and gearbox being in the upper portion of this range.

The wind turbine may be of the type that is installed on the seabed, e.g. by a monopile or a jacket foundation or the like. In another design the wind turbine is embodied on a floating structure, so with the wind turbine also being fully exposed to wave action and moving due to said wave action.

In a common approach the vessel is a jack-up vessel that is positioned close to the wind turbine and then the legs are extended and the vessel is lifted, at least in part but mostly entirely, to provide a stabilized situation for the crane operation.

The jack-up process and the later lowering of a jack-up crane vessel is time consuming and in the jacked-up position significant constraints are placed on wave height, so that when the weather worsens the vessel must be brought in floating condition well in advance of the actual weather change. This reduces the effective operational window of such a vessel for offshore wind turbine related activities. Also, generally, sailing speed is usually less than of ordinary vessels.

It is noted that the invention is primarily envisaged for the offshore wind turbine field, so for maintenance, and also for installation and/or decommission of wind turbines. However the invention may also be of use in other offshore applications, like oil & gas related jobs, civil engineering operations, etc.

A crane with a motion-compensation actuator fixed at the tip of a positioning arm is disclosed in publication WO2015199543.

EP 2 365 211 A1 discloses a method according to the preamble of claim 1.

The invention relates to a method according to claim 1 for handling by means of a crane of one or more offshore wind turbine components, e.g. one or more components that are housed in a nacelle and/or mounted on the nacelle, e.g. gearbox, generator, hub and/or blades, of an offshore wind turbine, e.g. for installation and/or maintenance of an offshore wind turbine, wherein the crane comprises:
- a mobile hoist cable suspension member,
- a hoist winch and a hoist cable driven by said hoist winch, which hoist cable depends from said mobile hoist cable suspension member, wherein an object suspension device is suspended from said hoist cable,

wherein the mobile hoist cable suspension member is supported by a motion compensating support device, which motion compensating support device comprises one or more motor powered motion displacement actuator assemblies and a motion compensating support device controller, which motion compensating support device is configured to provide motion compensation in one or more, e.g. in at least two directions, e.g. in orthogonal X-Y directions,
wherein a first inertial measurement device is mounted on or in proximity of the nacelle and configured to provide one or more first reference signals representative of actual motion of the wind turbine nacelle or in proximity thereof, and a second inertial measurement device is mounted on the crane, e.g. in proximity of a tip end of a main boom of the crane, said second inertial measurement device being configured to provide one or more second reference signals representative of actual motion of the crane,
wherein the motion compensating support device controller is linked to both said first and second inertial measurement devices and configured to compute and provide control signals for said one or more motor powered motion displacement actuator assemblies on the basis of said first and second reference signals.

This arrangement allows to effectively compensate for motions of the nacelle and/or the top end of the mast of the wind turbine itself, e.g. induced by wind and/or waves.

In an embodiment the first reference signals are wireless transmitted to the motion compensating support device controller.

In an embodiment the vessel has a semi-submersible type hull with two parallel submerged or submergible pontoons, support columns extending upward from said pontoons, and a deck box structure supported on said columns.

It will be appreciated that aspects described herein are applicable to vessels operated in floating condition when handling a load by means of the crane and to vessels that are configured for crane operation in non-floating condition, e.g. a jacked-up jack-up crane vessel. As explained, even when a crane is mounted on a jack-up vessel and operated with the vessel jacked up, and thereby not affected by sea state as a floating vessel, the tall crane required for handling for example components to be placed in a nacelle will be subject to motion. Equally, even with the crane relatively still, the tall wind turbine may exhibit motion due to wind and/or sea state.

The crane may be an around-the-leg crane wherein the bearing supporting the superstructure is mounted to extend around a jack-up leg of a jack-up vessel.

In the drawings:
Fig. 1 shows schematically an example of an offshore crane vessel provided with a crane during the handling of a component to be installed in or removed from a nacelle of an offshore wind turbine,
Fig. 2 shows a plan view of the vessel of figure 1 during transit,

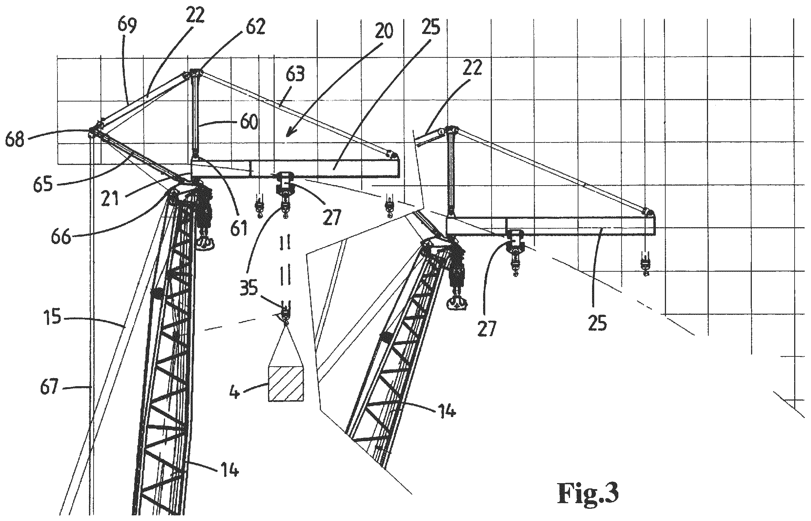

Fig. 3 shows a close-up of the tip end of the boom in various positions,
Fig. 4 shows a schematic explanation of the X,Y, Z compensation system of the crane of figure 1,
Fig. 5 shows a schematic explanation of the compensation in X-direction of the crane of figure 1,
Fig. 6 shows a schematic explanation of the compensation in Y-direction of the crane of figure 1,
Fig. 7 shows a schematic explanation of the compensation in Z-direction of the crane of figure 1,
Fig. 8 illustrates the provision of one or more sensors,
Fig. 9 illustrates the provision of an active damping mechanism,
Fig. 10 illustrates a vessel and crane wherein one or more of the aspects as discussed herein can be implemented,
Fig. 11 illustrates an alternative arrangement of jib hoist winches and cables.

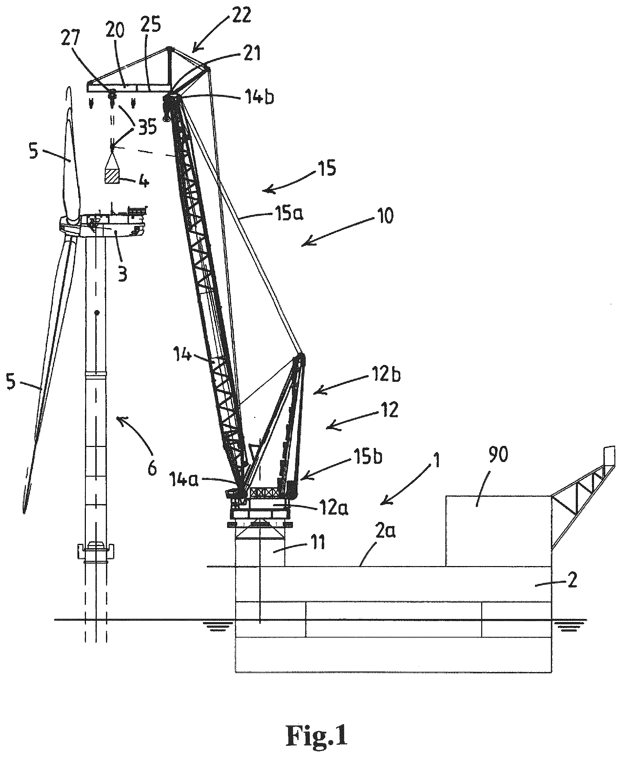

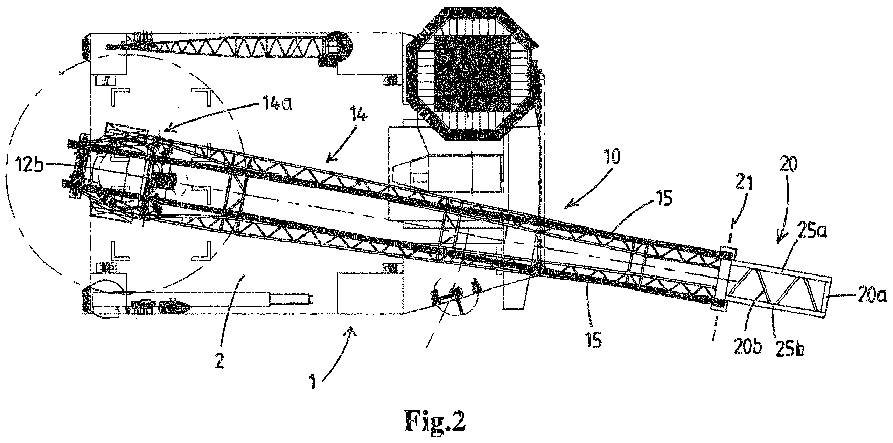

Figures 1 and 2 illustrate an offshore vessel 1 having a motion compensating crane 10 for use on an offshore vessel. The vessel has a hull 2 with a design waterline. The vessel is for example configured for use in handling of one or more offshore wind turbine components, e.g. the nacelle 3 and/or one or more components that are housed in a nacelle and/or mounted on the nacelle, e.g. gearbox, generator 4, hub and/or blades 5, of an offshore wind turbine 6. These activities may relate to installation and/or maintenance of an offshore wind turbine 6.

As will be appreciated by the skilled person, the illustrated vessel 1 is a semi-submersible vessel having two parallel submergible pontoons, columns extending upwards from each of these pontoons, and a deck box structure supported by the columns, the deck box structure having a deck, the base structure being fixed to said deck.

As will be appreciated by the skilled person, the illustrated vessel 1 has a crew and bridge superstructure 90 at the bow of the vessel. The vessel has a deck 2a aft of the crew and bridge superstructure 90.

The crane 10 here is mounted at the stern of the vessel 1.

As illustrated the crew and bridge superstructure is arranged asymmetrically at the bow of the vessel, e.g. toward the port side thereof, and the crane 10 is arranged asymmetrically at the stern of the vessel, opposite from the centreline of the vessel relative to the crew and bridge superstructure, e.g. toward the starboard side thereof.

The crane 10 comprises:
- a base structure 11 adapted to be secured to the hull 2 of the vessel, here fixed to the deck of the vessel;
- a revolving superstructure 12 mounted on the base structure 11 and adapted to revolve about a substantially vertical revolving axis relative to the base structure;
- a slew drive adapted to revolve said superstructure, for example a rack and pinion drive;
- a main boom 14 mounted to the revolving superstructure 12 and pivotally connected at an inner end thereof about a substantially horizontal boom pivot axis 14a to the revolving superstructure 12, the main boom having a tip end 14b remote from this inner end;
- a main boom luffing assembly 15 adapted to set an angle of the main boom relative to the superstructure within a main boom working angle range.

The superstructure comprises a crane housing 12a and a gantry structure 12b erected on and supported by the crane housing 12a. The crane housing 12a is mounted via a slew bearing on the base structure 11.

The main boom luffing assembly 15 of the crane comprises a main boom luffing cable 15a and winch system 15b. The luffing cable extends between the gantry structure 12b and the main boom 14 and allows to pivot the boom 14 up and down by means of a luffing winch 15b and to set the main boom in one or more desired angles within the working range thereof. The crane housing 12a comprises one or more main boom supports at a front side of the crane housing.

The gantry structure 12b comprises a substantially vertical rear gantry frame member connected at a lower end thereof to the rear side of the crane housing, and the gantry structure comprises front gantry frame member attached at an upper end thereof to the rear gantry frame member and extending inclined forward to an attachment on the crane housing in proximity of the one or more main boom supports.

In an embodiment the crane housing comprises a left-hand main boom support and a righthand main boom support spaced from one another in said Y - direction. For example the main boom is a twin leg main boom, each leg pivotally secured to a respective main boom support.

In particular in view of deployment of the vessel 1 in an offshore wind farm the main boom 14, e.g. a lattice boom 14, has a length and a main boom working angle range such that the tip end thereof is positionable in a position wherein the tip end is at least 100 meters above the design waterline of the hull of the vessel.

The crane further comprises:
- a rigid jib frame 20 that is pivotally connected to the tip end of the main boom 14 about a substantially horizontal jib frame pivot axis 21,
- a level setting assembly 22 that is adapted to set the rigid jib frame 20 in a levelled position whilst the main boom 14 has any angle within said main boom working angle range.

As illustrated the rigid jib frame 20 is provided with a set of parallel X - direction tracks 25 that extend perpendicular to the horizontal jib frame pivot axis 21 and which are substantially horizontal in a levelled position of the rigid jib frame 20.

As illustrated the rigid jib frame 20 has a first X -direction frame beam provided with said first X - direction track 25a and a parallel second X -direction frame beam provided with said second X - direction track 25b. For example the first and second X - direction frame beams are each embodied as a hollow box beam externally provided with said respective X - direction track.

As illustrated in figure 2 the rigid jib frame 20 is provided with an outer transverse frame beam 20a extending in Y - direction and interconnecting respective outer ends of the first and second X -direction frame beams. An inner transverse frame beam extending in Y - direction and interconnecting respective inner ends of the first and second X-direction frame beams may also be provided.

Figure 2 also illustrates that the rigid jib frame is provided with one or more diagonal bracing members 20b, e.g. the rigid jib frame having first and second X - direction beam members 25a, b and at least one of inner and outer transverse beam members 20a interconnecting the first and second X - direction beam members at the inner and outer ends thereof respectively, e.g. to form corners of a substantially rectangular frame portion.

In more detail the crane 10 is provided with:
- a jib frame strut structure 60 having an inner end 61 that is pivotally connected to the rigid jib frame in proximity of the pivot axis 21 thereof and having an outer end 62,
- at least one forestay member 63 extending from the outer end 62 of the jib frame strut structure 60 to an attachment point on the rigid jib frame 20 remote from the pivot axis 21 thereof,
- a main boom strut structure 65 having an inner end 66 connected to the main boom 14 in proximity of the tip end 14b thereof,
- a main boom backstay 67 extending between an outer end 68 of the main boom strut structure 65 and a lower portion of the main boom 14,
- a variable length stay mechanism 69 provided between the main boom strut structure 66 and the jib strut structure 60. This variable length stay mechanism 69 here forms the level setting assembly 22 and is adapted to set the rigid jib frame 20 in a levelled position whilst the main boom 14 has any angle within the main boom working angle range.

In an embodiment two forestay members 63 extend between the jib frame strut structure 60 and respective attachment points on the rigid jib frame 20, e.g. each secured at an end of a X - track 25a, b.

In an embodiment two backstay members extend between the main boom strut structure and the lower portion of the main boom.

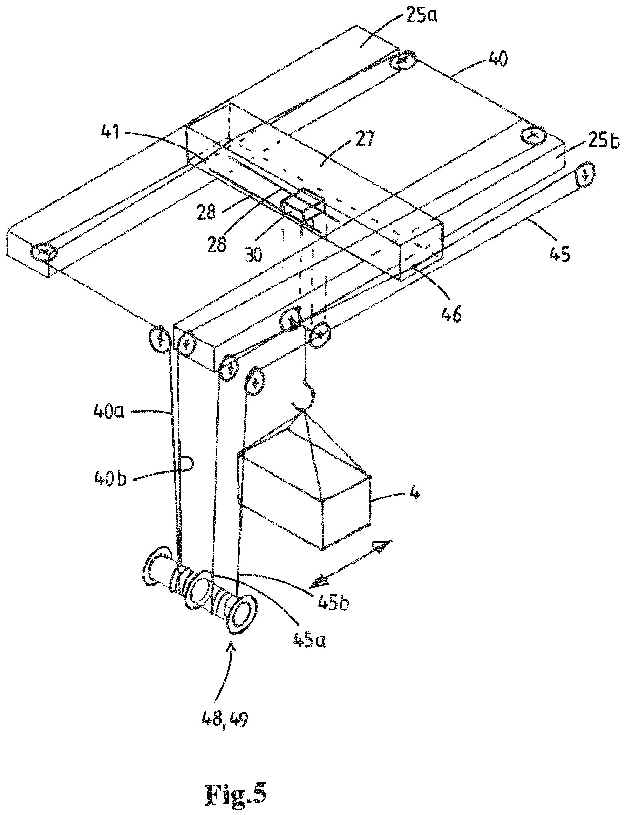

The crane 10 further comprises:
- a mobile carrier 27 that is supported by the parallel X - direction tracks 25 and is movable relative thereto in an X-direction,
- a motor powered X - motion displacement actuator assembly (see figure 5) that is adapted to move the mobile carrier 27 in said X - direction relative to said X- direction tracks 25,

The mobile carrier 27 is provided with one or multiple parallel Y- direction tracks 28 that extend perpendicular to the X - direction tracks 25.

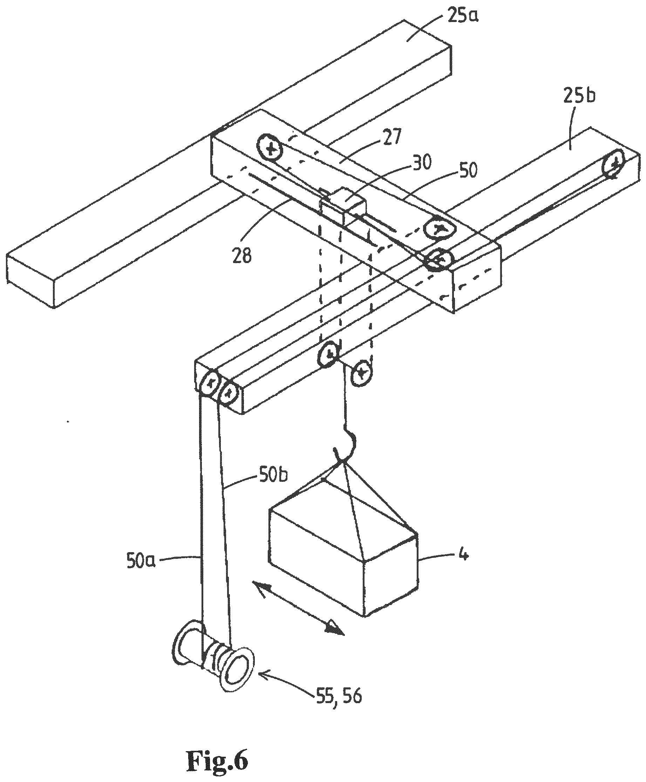

The crane 10 further comprises:
- a mobile jib hoist cable suspension member 30 that is supported by the one or more Y-direction tracks 28 and is movable relative thereto in an Y - direction,
- a motor powered Y - motion displacement actuator assembly (see figure 6) that is adapted to move the mobile jib hoist cable suspension member 30 in said Y - direction relative to the one or more Y- direction tracks 28,

The crane 10 further comprises a jib hoist winch 32, 33 and a jib hoist cable 34 driven by the hoist winch 32, 33, which jib hoist cable 34 depends from the mobile jib hoist cable suspension member 30. An object suspension device 35 is suspended from the jib hoist cable 34.

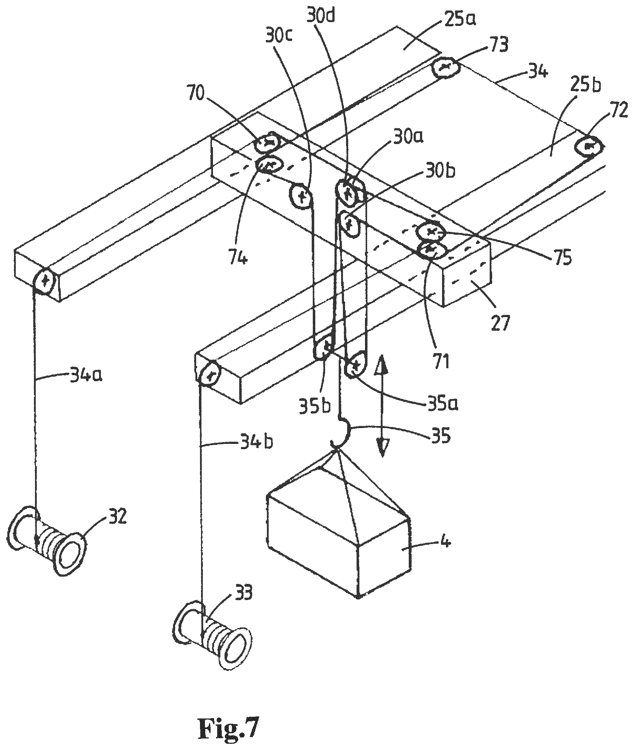

The crane 10 further comprises a Z - direction heave motion compensation device, here embodied by AHT (active heave compensating) winches 32, 33 in figure 7, that acts on the jib hoist cable 34 and is integrated in the jib hoist winch and/or comprises a jib hoist cable engaging member that is arranged and adapted to act on the jib hoist cable intermediate the hoist winch object suspension device suspended from the jib hoist cable.

Figure 5 illustrates that the X-direction winch and cable assembly comprises a first X-direction cable 40 attached to the mobile carrier 27 at a first attachment point 41 thereof in proximity of a first X -direction track 25a of the rigid jib frame 20. A second X-direction cable 45 is attached to the mobile carrier 27 at a second attachment point 46 thereof in proximity of a second X -direction track 25b of the rigid jib frame 20.

The X-direction winch and cable assembly comprises a motor powered X - direction winch 48 having a rotatable winch drum 49 with first, second, third, and fourth drum sections. Herein a first end 40a of the first X -direction cable 40 is wound onto the first drum section. A second end 40b of the first X- direction cable 40 is wound onto the second drum section in opposite sense to the winding of the first end 40a of the first X-direction cable. A first end 45a of the second X-direction cable 45 is wound onto the third section, and a second end 45b of the second X direction cable 45 is wound onto the fourth section in opposite sense to the winding of the first end 45a of the second X - direction cable.

Figure 6 illustrates that the Y - direction winch and cable assembly has a single Y -direction cable 50 that is attached to the mobile hoisting cable suspension member 30 and an associated motor power Y - direction winch 55 having a rotatable winch drum 56 with a first and section drum section. Herein a first end 50a of the single Y- direction cable is wound onto the first drum section and a second end 50b of the single Y -direction cable is wound onto the second drum section in opposite sense to the winding of the first end 50a of the Y - direction cable.

In an embodiment one or more of the motor powered motion displacement actuator assemblies, for example the winch(es) associated with the X-direction and/or with the Y-direction, here winches 48,49 and 55, 56 are provided with a clutch device that is configured to provide a free-floating mode of the motion compensating support device in the event of an electrical black-out. Unfortunately black-outs do occur on offshore vessels for various reasons. By providing one or more clutches, e.g. between a winch drive motor and the drum, that switch automatically into a free-floating mode upon occurrence of a black-out an undue force on a load 4 suspended from cable 34 is avoided. For example when the load is a gearbox still within the nacelle 3 the suspension member 30 will remain generally centered above the gearbox when free-floating mode is provided for in both X and Y direction. Of course it is envisaged that the winch(es) governing the Z-direction is not switched in free-floating mode.

In view of the occurrence of black-out the crane 10 may be provided with one or more back-up energy storage devices configured to provide electrical power to at least electric motor powered motion displacement actuator assemblies, here winches 48,59 and 55, 56, and 32, 33, in the event of a black-out on board the vessel. For example said one or more back-up energy storage devices comprise:
- a back-up electrical battery,
- a supercapacitor device,
- a flywheel coupled to an electrical generator,
- a back-up fuel powered generator.

The crane 10 may be provided with one or more back-up energy storage devices configured to provide hydraulic power to at least hydraulic motor powered motion displacement actuator assemblies in the event of a black-out on board the vessel. These one or more back-up energy storage devices comprise for example:
- a hydraulic accumulator,
- a bank of compressed gas, e.g. nitrogen gas, storage vessels connected to a gas pressurized hydraulic cylinder of which a hydraulic chamber is connected to said hydraulic motor powered motion displacement actuator assemblies.

Figure 7 illustrates that the jib hoist cable 34 has a first end 34a and a second end 34b. The mobile jib hoist cable suspension member 30 is comprises a first and a second top sheave, here four top sheaves 30a-d, each having a horizontal sheave axis.

The object suspension device 35 comprises a first bottom sheave, here two bottom sheaves 35a,b. The jib hoist cable 34 extends in a double fall arrangement between the four top sheaves 30a-d and the two bottom sheaves 35a,b.

As illustrated the mobile jib hoist cable suspension member 30 comprises a first top sheave 30a, a second top sheave 30b, a third top sheave 30c, and a fourth top sheave 30d to arrive at a four fall arrangement of the hoist cable 34. One or more additional pairs of top sheave, and for each pair an additional bottom sheave can be provided for if an even greater number of falls is desired.

The mobile carrier 27 is provided with first and second cable guiding sheaves 70,71 at opposite locations thereon seen in Y - direction.

The jib hoist cable 34 passes from a first end 34a thereof in a positive X - direction, e.g. away from the axis 21, to the first cable guiding sheave 70 on the mobile carrier 28, and then from the first cable guiding sheave 70 on the mobile carrier to the first top sheave 30a, via the first bottom sheave 35a to the second top sheave 30b, and from the second top sheave 30b to the second cable guiding sheave 71 on the mobile carrier 27.

The rigid jib frame is provided with third and fourth cable guiding sheaves 72,73, each in proximity of an end of a respective second and first X - direction track 25b,25a of the rigid jib frame.

The jib hoist cable 34 extends from the second cable guiding sheave 71 on the mobile carrier in said positive X - direction to said third cable guiding sheave 72 on the rigid jib frame, and from the third cable guiding sheave 72 to the fourth cable guiding sheave 73.

The mobile carrier 27 is further provided with fifth and sixth cable guiding sheaves 74,75. The fifth cable guiding sheave 74 is arranged in proximity of the first cable guiding sheave 70 and the sixth cable guiding sheave 75 in proximity of the second cable guiding sheave 71.

The jib hoist cable 34 extends from the fourth cable guiding sheave 73 on the rigid jib frame in a negative X - direction to the fifth cable guiding sheave 74 on the mobile carrier 27 and passes from the fifth cable guiding sheave 74 to the third top sheave 30c, down to the second bottom sheave 35b and up to the fourth top sheave 30d, and from said fourth top sheave 30d to the sixth cable guiding sheave 75.

The jib hoist cable extends from the sixth cable guiding sheave in a negative X - direction to said second end 34b of the hoisting cable.

At least one of said first and second ends of the jib hoist cable is connected to a hoisting winch 32, 33. If just one winch is provided for one end, the other end may be embodied to an anchoring point.

In an embodiment a first jib hoist winch 32 is connected to said first end 34a, e.g. said first jib hoist winch having a drum onto which said first end is wound, and a second jib hoist winch 33 is connected to said second end 34b, e.g. a second jib hoist winch having a drum onto which said second end is wound.

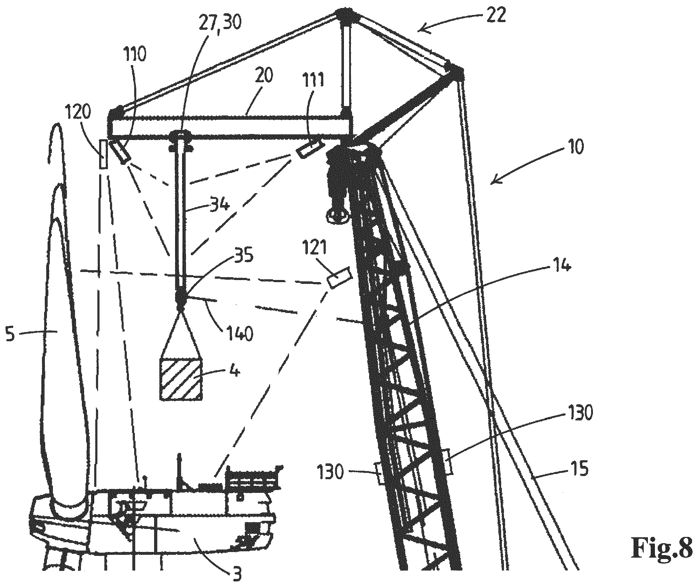

Figure 8 illustrates schematically that the crane 10 is provided with one or more jib cable orientation sensors, e.g. one or more camera's 110, 111, or inclination sensors, that are adapted to sense the actual orientation of one or more falls of the jib hoist cable 34 relative to the jib frame 20, e.g. in view of wind deflecting the object 4 and/or object suspension device 35 from a position vertically below the mobile jib hoist cable suspension member 30.

Figure 8 illustrates schematically that the crane 10 is provided with one or more nacelle position detectors 120, 121, that are adapted to sense the actual position of the nacelle 3, or part thereof, and/or one or more components in or on the nacelle 3 relative to the jib frame 20, e.g. wherein said nacelle position detectors comprises one or more radar devices, a LiDAR sensor system, and/or one or more camera's.

Figure 8 illustrates schematically that the crane 10 is provided with one or more sensors that are adapted to sense an actual deflection of the main boom 14, e.g. one or more force sensors, e.g. strain gauges 130 fitted on the main boom.

In an embodiment the main boom is provided with one or more force sensors 130 that are configured to provide reference signals representative of actual load on the main boom 14, wherein the motion compensating support device controller, here controlling winches 48,49, 55, 56, is linked to said one or more force sensors 130 and configured to compute and provide control signals for said one or more motor powered motion displacement actuator assemblies on the basis of said reference signals of said one or more force sensors 130.

For example use is made of an optical fiber Bragg grating force sensor.

The force sensors may represent actual deflection and/or dynamic motion within the main boom 14, which is then taken into account by the motion compensating support device controller when it comes to controlling the one or more motor powered motion displacement actuator assemblies.

Figure 8 illustrates schematically that the crane 10, e.g. the main boom 14, is provided with one or more tugger winches, e.g. in proximity of the tip end of the main boom and/or on the jib frame. Each tugger winch is provided with a tugger cable 140 attachable to the object 4 and/or to the object suspension device 35 that is suspended from the jib hoist cable 34.

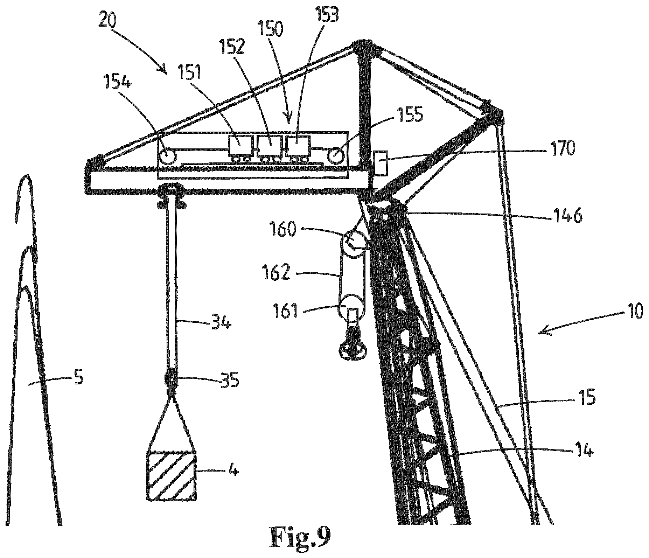

Figure 9 illustrates schematically that the crane 10 is provided with an active motion damping mechanism 150, that is mounted to the jib frame 20. In an alternative such a mechanism could be mounted to the main boom 14, e.g. in proximity of the tip 14b of the main boom 14.

The active motion damping mechanism 150 here, as an example, comprises a solid motion damping ballast, here of one or more, e.g. multiple interconnected, ballast members 151, 152, 153, e.g. each on a wheeled carrier travelling over a ballast guide rails, which ballast is movable in the motion damping direction relative to the jib frame 20. A damping ballast drive and control system, here with one or more winches 154, 155 and one or more cables connected to the solid ballast, is configured to cause and control the movements of the solid damping ballast 151,152,153. This may be done in response to output of a motion detection sensor 170, e.g. an inertial measurement device mounted on the jib frame and//or in proximity of the top of the main boom 14.

Depicted here is a motion damping ballast mechanism 150 that is configured to counteract undue motions in X-direction of the jib frame 20. In another embodiment, or additionally, a second motion damping mechanism with movable solid ballast can be arranged and configured to operate in Y-direction.

In an embodiment it is envisaged that the active motion damping mechanism 150 is operated in the relatively short time periods of pick-up and landing a load, e.g. of a component 4 that is removed from the nacelle or placed in the nacelle 3.

For example the e.g. the active motion damping mechanism 150 is releasably mounted to the jib frame 20 or to the main boom in proximity of the tip of the main boom, for example so that the effective hoist capacity can be enlarged by removal of the active motion damping mechanism when a heavy load needs to be handled.

In an embodiment an inertial measurement device 170 is mounted at the tip of the main boom or on the jib frame. This inertial measurement device provides one or more reference signals on the basis of which control signals for at least one of the motor powered X - motion displacement actuator assembly, the motor powered Y - motion displacement actuator assembly, and the Z - direction heave motion compensation device are computed and provided, each thereof being configured to independently control of the X motion of the mobile carrier, of the Y motion of the mobile jib hoist cable suspension member, and of the Z- direction heave motion compensation of the object suspension device. This arrangement, when appropriately construed, allows to compensate for motions of the jib frame and/or main boom, for example wind induced motion, sea state induced motion, vibrations in the main boom (e.g. resulting from shifting of the load suspended from the crane relative to the main boom), deflections of the main boom, etc. As explained the device 170 may, also or in the alternative, be configured to provide a control signal for an active motion damping mechanism 150.

In combination with, the inertial measurement device 170 a GPS receiver can be provided, e.g. at the tip end of the main boom and/or on the jib frame.

Figure 9 illustrates schematically that the crane 10 is provided with a main hoist system comprising a top sheaves assembly 160 arranged in proximity of the tip end 14b of the main boom 14, a main hoist block 161 having multiple sheaves, a main hoist cable 162 and a main hoist winch, e.g. on the housing 12a. The main hoist block 161 is suspended from the top sheaves assembly 160 by means of the main hoist cable in a multiple falls arrangement.

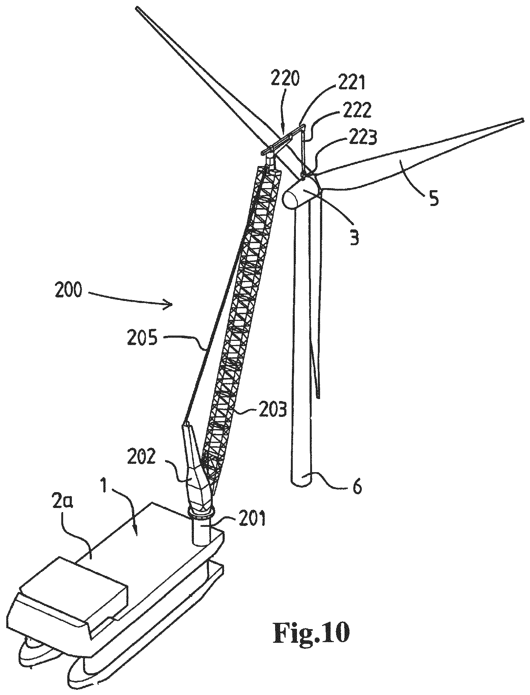

Figure 10 illustrates a vessel 1 and crane 200 wherein the invention can be implemented. The crane is described in detail in co-pending PCT/NL2017/050812.

The vessel has a hull 2 with deck 2a.

The crane has a pedestal 201, a revolving superstructure 202, a main boom 203, a main boom luffing assembly 205. A motion compensating support device 220 with a level setting pedestal is mounted at the tip end of the main boom 203. A jib 221 thereof is rotatable about a vertical axis and extendable and retractable in radial direction relative to said vertical axis. A jib hoisting cable 222 extends to a load connector 223 that may serve to hoisting a load, e.g. a component to be placed in the nacelle of the depicted offshore wind turbine.

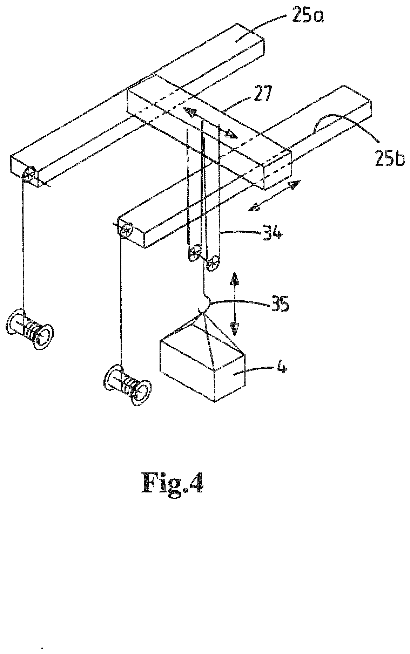

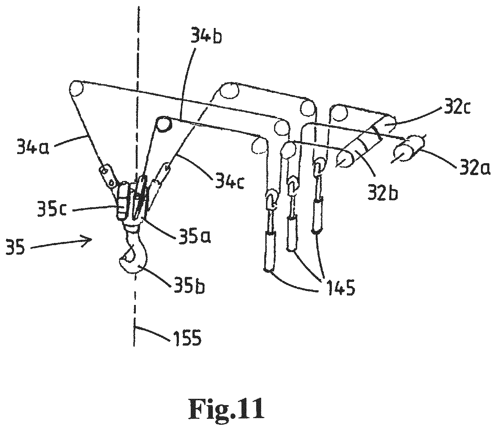

Figure 11 illustrates an alternative arrangement of jib hoisting winch and jib hoisting cable, e.g. as alternative to the arrangement illustrated in figures 4 and 7.

Here at least three jib hoist cables 34a,b,c extend each from a respective jib hoist winch 32a,b,c to the load connector 35, with the cables 34a,b,c, extending to define a reverse pyramid diverging upward from the load connector 35. This provides stability of the location of the load connector relative to the member 30 and could also be done with four jib hoist cables and winches in a reverse pyramidal arrangement of the four jib hoist cables. The respective jib hoist winches 32a,b,c may be mounted on the member 30 itself or at another location, e.g. on the frame 20 or on the main boom 14. For example the jib hoist winches 32a,b,c are embodied as AHC (active heave compensated) winch(es), or, as shown, a hoist heave compensation mechanism comprising a heave compensating cylinder 145 is configured to act on each jib hoist cable 34a,b,c.

In an embodiment the load connector 35, as illustrated here, comprises an upper part 35a suspended from one or more jib hoist cables 34a,b,c and a rotatable lower part 35b, e.g. a hook, that is configured to connect to the load and is rotatable relative to the upper part of the load connector about a vertical axis 155. This allows to rotate the object load around a vertical axis of the load connector. The rotating of the lower part relative to the upper part is controlled by means of the control device, e.g. a motorized rotation drive 35c if present, so that said rotating and thereby the actual angular position of the load 4 in its horizontal plane is controlled thereby. It will be appreciated that a rotation of the lower part 35a may be controlled with the aid of one or more of the sensors, cameras, etc. as described herein.

## Claims

1. Method for handling by means of a crane (10) of one or more offshore wind turbine components, e.g. one or more components (4) that are housed in a nacelle (3) and/or that are mounted on the nacelle, e.g. gearbox, generator, hub and/or blades (5), of an offshore wind turbine (6), e.g. for installation and/or maintenance of an offshore wind turbine, **characterized in that**
the crane comprises:
- a mobile hoist cable suspension member (30),
- a hoist winch and a hoist cable (34) driven by said hoist winch, which hoist cable depends from said mobile hoist cable suspension member, wherein an object suspension device (35) is suspended from said hoist cable,
wherein the mobile hoist cable suspension member is supported by a motion compensating support device, which motion compensating support device comprises one or more motor powered motion displacement actuator assemblies and a motion compensating support device controller, which motion compensating support device is configured to provide motion compensation in one or more, e.g. in at least two directions, e.g. in orthogonal X-Y directions,
wherein a first inertial measurement device is mounted on or in proximity of the nacelle and configured to provide one or more first reference signals representative of actual motion of the wind turbine nacelle (3) or in proximity thereof, and a second inertial measurement device (170) is mounted on the crane, e.g. in proximity of a tip end (14b) of a main boom (14) of the crane (10), said second inertial measurement device being configured to provide one or more second reference signals representative of actual motion of the crane,
wherein the motion compensating support device controller is linked to both said first and second inertial measurement devices and configured to compute and provide control signals for said one or more motor powered motion displacement actuator assemblies on the basis of said first and second reference signals.

2. Method according to claim 1, wherein the first reference signals are wireless transmitted to the motion compensating support device controller.

3. Method according to claim 1 or claim 2, wherein the crane comprises
- a main boom (14) pivotally connected at an inner end thereof about a substantially horizontal boom pivot axis (14a), said main boom having a tip end (14b) remote from said inner end, and
- a main boom luffing assembly (15) adapted to set an angle of the main boom within a main boom working angle range,
wherein the main boom (14) has a length and a main boom working angle range such that the tip end (14b) thereof is positionable in a position wherein the tip end is at least 100 meters above the design waterline of the hull of the vessel.

## Patentansprüche

1. Verfahren zum Handhaben, mittels eines Krans (10), einer oder mehrerer Komponenten von Offshore-Windenergieanlagen, z. B. einer oder mehrerer in einer Gondel (3) untergebrachter und/oder an der Gondel montierter Komponenten (4), z. B. Getriebe, Generator, Nabe und/oder Rotorblätter (5) einer Offshore-Windenergieanlage (6), z. B. zur Installation und/oder Wartung einer Offshore-Windenergieanlage,
**dadurch gekennzeichnet, dass** der Kran umfasst:
- ein bewegliches Hubseil-Aufhängungselement (30),
- eine Hubwinde und ein von der Hubwinde angetriebenes Hubseil (34), das von dem mobilen Hubseil-Aufhängungselement herabhängt, wobei eine Objektaufhängungsvorrichtung (35) an dem Hubseil aufgehängt ist,
wobei das mobile Hubseil-Aufhängungselement durch eine Bewegungskompensationsstützvorrichtung gestützt wird, wobei die Bewegungskompensationsstützvorrichtung eine oder mehrere motorbetriebene Bewegungsverlagerungsaktuatoranordnungen und eine Bewegungskompensationsstützvorrichtungssteuerung umfasst, wobei die Bewegungskompensationsstützvorrichtung dazu ausgelegt ist, eine Bewegungskompensation in einer oder mehreren, z. B. mindestens zwei Richtungen, z. B. in orthogonalen X-Y-Richtungen, bereitzustellen,
wobei eine erste Trägheitsmessvorrichtung an der Gondel oder in ihrer Nähe montiert ist und dazu ausgelegt ist, ein oder mehrere erste Referenzsignale bereitzustellen, die für eine tatsächliche Bewegung der Windenergieanlagengondel (3) oder in der Nähe davon repräsentativ sind, und eine zweite Trägheitsmessvorrichtung (170) an dem Kran montiert ist, z. B. in der Nähe eines Spitzenendes (14b) eines Hauptauslegers (14) des Krans (10), wobei die zweite Trägheitsmessvorrichtung dazu ausgelegt ist, ein oder mehrere zweite Referenzsignale bereitzustellen, die für eine tatsächliche Bewegung des Krans repräsentativ sind,
wobei die Bewegungskompensationsstützungsvorrichtungssteuerung sowohl mit der ersten als auch mit der zweiten Trägheitsmessvorrichtung verbunden ist und dazu ausgelegt ist, Steuersignale für die eine oder die mehreren motorbetriebenen Bewegungsverlagerungsaktuatoranordnungen auf der Basis der ersten und der zweiten Referenzsignale zu berechnen und bereitzustellen.

2. Verfahren nach Anspruch 1, wobei die ersten Referenzsignale drahtlos an die Bewegungskompensationsstützungsvorrichtungssteuerung übertragen werden.

3. Verfahren nach Anspruch 1 oder 2, wobei der Kran umfasst:
- einen Hauptausleger (14), der an einem inneren Ende davon um eine im Wesentlichen horizontale Auslegerschwenkachse (14a) schwenkbar verbunden ist, wobei der Hauptausleger ein von dem inneren Ende entferntes Spitzenende (14b) aufweist, und
- eine Wippwerk (15) des Hauptauslegers, die dazu ausgelegt is, einen Winkel des Hauptauslegers innerhalb eines Hauptauslegerarbeitswinkelbereichs einzustellen;
wobei der Hauptausleger (14) eine Länge und einen Hauptauslegerarbeitswinkelbereich aufweist, sodass dessen Spitzenende (14b) in einer Position positionierbar ist, in der das Spitzenende mindestens 100 Meter über der Konstruktionswasserlinie des Rumpfes des Schiffes liegt.

## Revendications

1. Procédé de manutention, au moyen d'une grue (10), d'un ou plusieurs composants d'éolienne en mer, par ex. d'un ou plusieurs composants (4) qui sont logés dans une nacelle (3) et/ou qui sont montés sur la nacelle, par ex. d'un multiplicateur, d'un générateur, d'un moyeu et/ou de pales (5) d'une éolienne en mer (6), par ex. pour l'installation et/ou la maintenance d'une éolienne en mer,
**caractérisé en ce que** la grue comprend :
- un organe de suspension de câble de levage mobile (30),
- un treuil de levage et un câble de levage (34) entraîné par ledit treuil de levage, lequel câble de levage pend dudit organe de suspension de câble de levage mobile, un dispositif de suspension d'objet (35) étant suspendu audit câble de levage,
dans lequel l'organe de suspension de câble de levage mobile est supporté par un dispositif de support à compensation de mouvement, lequel dispositif de support à compensation de mouvement comprend un ou plusieurs ensembles actionneurs de déplacement de mouvement motorisés et un contrôleur de dispositif de support à compensation de mouvement, lequel dispositif de support à compensation de mouvement est conçu pour assurer une compensation de mouvement dans une ou plusieurs directions, par ex. dans au moins deux directions, par ex. dans des directions X-Y orthogonales,
dans lequel un premier dispositif de mesure inertielle est monté sur ou à proximité de la nacelle et conçu pour délivrer un ou plusieurs premiers signaux de référence représentatifs du mouvement réel de la nacelle d'éolienne (3) ou à proximité de celle-ci, et un deuxième dispositif de mesure inertielle (170) est monté sur la grue, par ex. à proximité d'une extrémité distale (14b) d'une flèche principale (14) de la grue (10), ledit deuxième dispositif de mesure inertielle étant conçu pour délivrer un ou plusieurs deuxièmes signaux de référence représentatifs du mouvement réel de la grue,
dans lequel le contrôleur de dispositif de support à compensation de mouvement est relié à la fois audit premier et audit deuxième dispositif de mesure inertielle et conçu pour calculer et délivrer des signaux de commande pour ledit ou lesdits ensembles actionneurs de déplacement de mouvement motorisés sur la base desdits premiers et deuxièmes signaux de référence.

2. Procédé selon la revendication 1, dans lequel les premiers signaux de référence sont transmis sans fil au contrôleur de dispositif de support à compensation de mouvement.

3. Procédé selon la revendication 1 ou la revendication 2, dans lequel la grue comprend
- une flèche principale (14) reliée de manière pivotante, au niveau d'une extrémité intérieure de celle-ci, autour d'un axe de pivotement de flèche sensiblement horizontal (14a), ladite flèche principale comportant une extrémité distale (14b) distante de ladite extrémité intérieure, et
- un ensemble de relevage de flèche principale (15) adapté pour régler un angle de la flèche principale à l'intérieur d'une plage d'angles de travail de flèche principale,
la flèche principale (14) présentant une longueur et une plage d'angles de travail de flèche principale telles que son extrémité distale (14b) peut être placée dans une position dans laquelle l'extrémité distale se situe à au moins 100 mètres au-dessus de la ligne de flottaison nominale de la coque du navire.
